# FASCICULE DE BREVET EUROPEEN

(11) **EP 0 694 455 B1**
(45) Date de publication et mention de la délivrance du brevet: **24.03.1999**
(21) Numéro de dépôt: 95111409.9
(22) Date de dépôt: 20.07.1995
(51) Int. Cl.: B60S 1/04, F16B 17/00

(54) **Platine-support pour un mécanisme d'essuie-glace comportant des moyens perfectionnés de fixation d'un palier de support.**
Trägerplatte eines Scheibenwischermechanismus mit Mitteln zum Befestigen eines Stützlagers
Support frame for a windscreen wiper mechanism, including means for attaching a support bearing

(30) Priorité: 26.07.1994 FR 9409334
(43) Date de publication de la demande: 31.01.1996
(73) Titulaire: VALEO SYSTEMES D'ESSUYAGE, 78321 La Verrière (FR)
(72) Inventeur: Gauthier, Jacky, F-86490 Colombiers (FR)
(74) Mandataire: Gamonal, Didier

(56) Documents cités:
- EP-A- 0 195 150
- DE-A- 2 920 899
- FR-A- 2 670 730

## Description

La présente invention concerne une platine-support pour un mécanisme d'essuie-glace du type comportant un élément tubulaire dont l'extrémité libre ouverte reçoit un tronçon complémentaire d'un palier de support d'un arbre d'essuie-glace.

Selon une conception connue, l'élément tubulaire est un élément de structure allongée qui est fixé à une plaque-support de la platine et dont l'extrémité libre permet d'assurer la fixation axiale et en rotation d'un palier de support pour l'arbre d'entraînement d'un essuieglace qui est entraîné en mouvement de balayage alternatif par une tringlerie qui relie chaque arbre à des composants d'entraînement fixés sur la plaque-support.

Selon la conception connue décrite et représentée dans le document DE-A-2.920.899 et dans le document FR-A-2.670.730, le tronçon cylindrique du palier comporte au moins un évidement longitudinal sensiblement parallèle à l'axe du tronçon dans lequel une portion de la paroi en vis-à-vis de l'élément tubulaire est enfoncée par déformation au moyen d'un poinçon selon une direction sensiblement perpendiculaire à l'axe du tube.

Cette technique permet d'assurer par sertissage la fixation de l'extrémité de l'élément de structure tubulaire sur le tronçon de palier en forme de moignon cylindrique reçu à l'intérieur de l'extrémité de l'élément tubulaire.

On constate toutefois que cette technique ne permet par d'assurer de manière fiable une liaison rigide et que l'on constate, en utilisation, l'apparition d'un jeu axial dans la liaison.

De plus, cette technique de sertissage ne permet pas d'assurer une précision du positionnement axial du palier de support par rapport à l'élément de structure tubulaire lors de l'opération de sertissage.

On constate également dans certain cas des phénomènes d'éclatement de la paroi de l'élément tubulaire lors de l'opération de sertissage.

La présente invention a pour but de proposer un perfectionnement de la conception de la platine-support mentionnée précédemment qui permet de remédier aux inconvénients qui viennent d'être évoqués.

Dans ce but, l'invention propose une platinesupport, caractérisée en ce que l'évidement est délimité longitudinalement par deux faces d'extrémité sensiblement planes, inclinées selon des sens opposés par rapport à la direction de déplacement du poinçon et complémentaires de deux pentes inclinées du poinçon.

Selon des modes de reálisation de l'invention :
- chacune des faces d'extrémité du logement est inclinée sensiblement à 45° par rapport à l'axe du tronçon ;
- chacune des faces d'extrémité du logement est inclinée sensiblement à 45° par rapport à la direction de déplacement du poinçon ;
- le tronçon comporte au moins une paire d'évidement parallèles et adjacents séparés par une nervure parallèle à la direction de déplacement du poinçon et à l'axe du tronçon ;
- le tronçon comporte deux paires d'évidements parallèles et adjacents diamétralement opposées ;
- chaque évidement longitudinal est ouvert latéralement d'un côté et est délimité latéralement d'un autre côté par la nervure de séparation ;
- le tronçon de palier comporte un épaulement radial d'appui axial pour l'extrémité libre de l'élément tubulaire ;
- l'extrémité libre de l'élément tubulaire présente une section transversale circulaire.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective illustrant une platine-support pour un mécanisme d'essuie-glace ;
- la figure 2 est une vue en perspective qui illustre un palier support d'un arbre d'essuie-glace réalisé conformément aux enseignements de l'invention en association avec un poinçon de sertissage ;
- la figure 3 est une vue schématique en élévation qui illustre le palier de la figure 2 sur lequel est monté l'extrémité libre de l'élément tubulaire avant l'opération de sertissage ;
- la figure 4 est une vue en section partielle selon la ligne 4-4 de la figure 3 ;
- la figure 5 est une vue similaire à celle de la figure 3 qui illustre les poinçons en position sertie ; et
- la figure 6 est une vue similaire à celle de la figure 4 à l'issue de l'opération de sertissage.

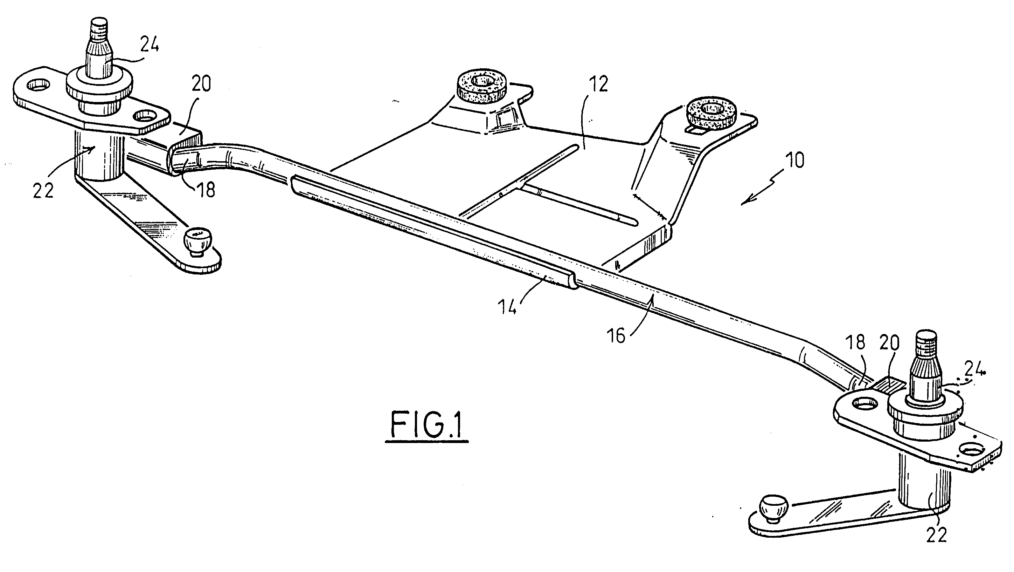

La platine-support 10 illustrée sur la figure 1 pour l'essentiel constituée par une plaque-support 12 sur un bord incurvé 14 de laquelle est soudé un élément de structure tubulaire allongé 16.

L'élément tubulaire 16 est, dans ce mode de réalisation, constitué par un tube cylindrique cintré et plié dont chacune des extrémités libres 18 est fixée à moignon 20 appartenant à un palier 22 servant de support à un arbre 24 pour l'entraînement à rotation alternée d'un bras d'essuie-glace (non représenté).

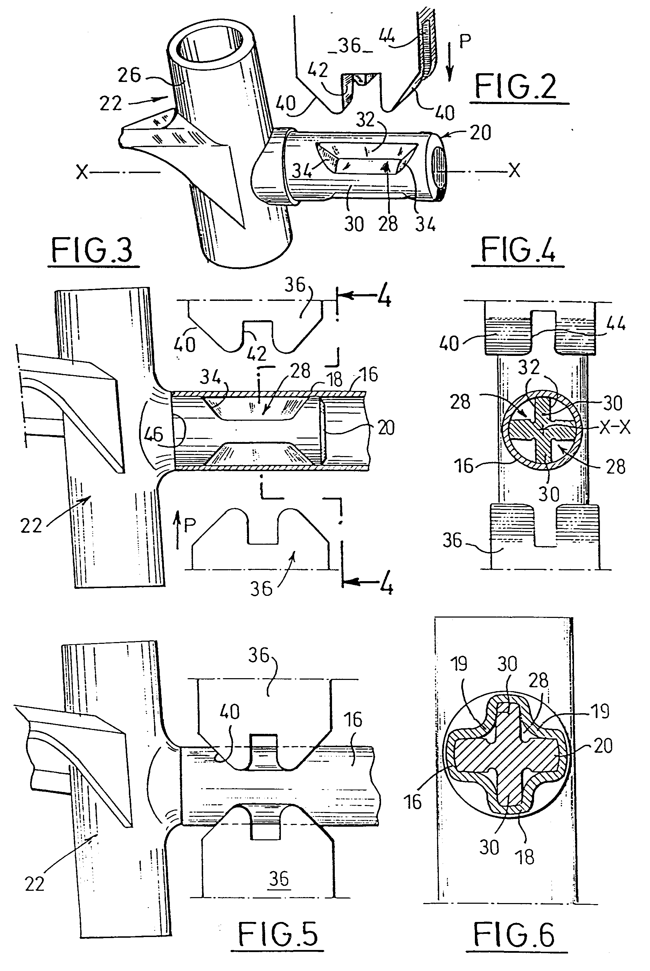

En se reportant à la figure 2, le palier de support 22 selon l'invention comporte un corps principal tubulaire 26 prévu pour recevoir à rotation l'arbre 24 et un moignon transversal en forme de tronçon cylindrique 20.

Le palier de support 22 est une pièce réalisée par moulage.

Conformément à l'invention, le tronçon 20 est prévu pour être reçu à l'intérieur de l'extrémité libre 18 du tube de structure 16 et présente à cet effet un diamètre extérieur légèrement inférieur à celui du tube 16 comme cela est illustré sur la figure 3.

Le tronçon 20 comporte deux paires d'évidements 28 qui sont agencés, dans ce mode de réalisation, symétriquement par rapport à l'axe X-X commun au tronçon et à l'extrémité 18 du tube 16.

Les logements ou évidements 28 sont séparés deux à deux part une nervure centrale longitudinale 30 parallèle à l'axe X-X.

Comme on peut le voir sur la figure 2, chacun des évidements 28 s'étend longitudinalement parallèlement à l'axe X-X et est délimité latéralement par une face 32 d'une nervure 30 et est ouvert latéralement de l'autre côté vers l'extérieur.

Chaque logement longitudinal 28 est, conformément à l'invention, délimité longitudinalement à ses deux extrémités par une face d'extrémité sensiblement plane 34 qui forme un angle sensiblement à 45° par rapport à l'axe X-X et qui est perpendiculaire à la face latérale 32 de la nervure 30.

Les deux faces latérales parallèles et opposées 32 des deux nervures 30 s'étendent selon une direction P qui est la direction de déplacement, ou de poinçonnage, des deux poinçons de sertissage 36.

Ainsi, chacun des deux poinçons opposés 36 est susceptible de se déplacer selon la direction P qui est sensiblement perpendiculaire à l'axe X-X pour effectuer le sertissage de la partie correspondante 19 de l'extrémité libre ouverte 18 du tube 16 dans les évidements 28.

Dans le mode de réalisation illustré sur les figures, chacun des deux poinçons 36 est un poinçon double qui effectue simultanément le sertissage dans deux évidements adjacents 28 au moyen de son extrémité de forme.

A cet effet, chacune des deux parties d'un poinçon 36 comporte deux pentes 40 inclinées à 45° complémentaires du profil des faces planes d'extrémités 34 du logement 28.

Pour permettre le fluage de la paroi du tube 18 lors du poinçonnage, chacune des parties d'un poinçon double 36 comporte une cavité centrale 42.

Les deux parties d'un poinçon 36 sont également séparées par un logement 44 qui s'étend selon la direction P pour permettre le passage de la nervure 30 et de l'épaisseur de la paroi de l'extrémité 18 du tube 16.

Afin de déterminer une position axiale précise de l'extrémité 18 du tube 16 par rapport au palier 22, ce dernier comporte un épaulement radial 46 qui sert d'appui axial à l'extrémité libre du tube 16.

Le sertissage est effectué comme cela est illustré aux figures 3 et 4, après avoir mis en place l'extrémité libre 18 du tube 16 sur le tronçon 20, par poinçonnage simultané et opposé au moyen des deux poinçons 36 qui se déplacent de manière opposée selon la direction P et qui effectuent simultanément le sertissage des parties correspondantes 19 de la paroi d'extrémité libre 18 du tube 16, comme cela est illustré notamment sur la figure 6.

Du fait de l'agencement incliné et opposé des faces d'extrémité longitudinale 34 des logements 28, le poinçonnage s'effectue de manière très précise sans déplacement axial de l'extrémité 18 du tube 16 par rapport au tronçon 20 et l'assemblage ainsi réalisé par sertissage présente une grande rigidité.

L'immobilisation en rotation du tube 16 par rapport au palier du support 22 est également assure simultanément du fait de la conformation des logements 28.

On constate également que les évidements ou logements 28 formés de manière symétrique dans le tronçon 20, de part et d'autre d'un plan axial, permet de réaliser le palier 22 par moulage au moyen d'un outillage de moulage simplifié dans la mesure où les noyaux nécessaires à la réalisation du moule 28 se déplacent selon direction similaire à celle du noyau nécessaire à la réalisation de l'alésage pour l'arbre 24.

## Revendications

1. Platine-support (10) pour un mécanisme d'essuie-glace du type comportant un élément tubulaire (16) dont l'extrémité libre ouverte (18) reçoit un tronçon complémentaire (20) d'un palier (22) de support d'un arbre d'essuie-glace (24) et du type dans lequel le tronçon (20) comporte au moins un évidement longitudinal (28) sensiblement parallèle à l'axe du tronçon (20) dans lequel une portion (19) de la paroi en vis-à-vis (18) de l'élément tubulaire est enfoncée par déformation au moyen d'un poinçon (36) selon une direction (P) sensiblement perpendiculaire à l'axe (X-X) du tube, caractérisée en ce que l'évidement est délimité longitudinalement par deux faces d'extrémité (34) sensiblement planes, inclinées selon des sens opposés par rapport à la direction de déplacement (P) du poinçon (36) et complémentaires de deux pentes inclinées (40) du poinçon (36).

2. Platine-support selon la revendication 1, caractérisée en ce chacune des faces d'extrémité (34) du logement (28) est inclinée sensiblement à 45° par rapport à l'axe X-X du tronçon (20).

3. Platine-support selon l'une des revendications 1 ou 2, caractérisée en ce que chacune des faces d'extrémité du logement (28) est inclinée sensiblement à 45° par rapport à la direction (P) du déplacement du poinçon (36).

4. Platine-support selon l'une quelconque des revendications précédentes, caractérisée en ce que le tronçon (20) comporte au moins une paire d'évidements (38) parallèles et adjacents séparés par une nervure (30) parallèle à la direction (P) de déplacement du poinçon (36) et à l'axe (X-X) du tronçon (20).

5. Platine-support selon la revendication 4, caractérisée en ce que le tronçon (20) comporte deux paires d'évidement (28) parallèles et adjacents, diamétralement opposées.

6. Platine-support selon l'une quelconque des revendications 4 à 5, caractérisée en ce que chaque évidement longitudinal (28) est ouvert latéralement d'un côté et délimité latéralement de l'autre côté par la nervure (30, 32) de séparation.

7. Platine-support selon l'une quelconque des revendications précédentes, caractérisée en ce que le tronçon (20) du palier (22) comporte un épaulement radial (46) d'appui axial pour l'extrémité libre de l'élément tubulaire (18).

8. Platine-support selon l'une quelconque des revendications précédentes, caractérisée en ce que l'extrémité libre (18) de l'élément tubulaire (16) présente une section transversale circulaire.

## Claims

1. Support plate (10) for a wiper mechanism of the type having a tubular element (16), the open free end (18) of which receives a complementary section (20) of a bearing (22) supporting a wiper shaft (24) and of the type in which the section (20) has at least one longitudinal recess (28) substantially parallel to the axis of the section (20) in which a portion (19) of the facing wall (18) of the tubular element is pushed in by deformation by means of a punch (36) in a direction (P) substantially perpendicular to the axis (X-X) of the tube, characterised in that the recess is delimited longitudinally by two substantially flat end faces (34), inclined in opposite directions with respect to the direction of movement (P) of the punch (36) and complementary to two inclined slopes (40) of the punch (36).

2. Support plate according to Claim 1, characterised in that each of the end faces (34) of the housing (28) is inclined at approximately 45^{º} with respect to the axis X-X of the section (20).

3. Support plate according to one of Claims 1 or 2, characterised in that each of the end faces of the housing (28) is inclined at approximately 45^{º} with respect to the direction (P) of movement of the punch (36).

4. Support plate according to any one of the preceding claims, characterised in that the section (20) has at least one pair of parallel and adjacent recesses (38) separated by a rib (30) parallel to the direction (P) of movement of the punch (36) and to the axis (X-X) of the section (20).

5. Support plate according to Claim 4, characterised in that the section (20) has two pairs of parallel and adjacent recesses (28), diametrically opposed.

6. Support plate according to either one of Claims 4 to 5, characterised in that each longitudinal recess (28) is open laterally on one side and delimited laterally on the other side by the separating rib (30, 32).

7. Support plate according to any one of the preceding claims, characterised in that the section (20) of the bearing (22) has a radial shoulder (46) for axial abutment of the free end of the tubular element (18).

8. Support plate according to any one of the preceding claims, characterised in that the free end (18) of the tubular element (16) has a circular transverse section.

## Patentansprüche

1. Halterung (10) für einen Scheibenwischermechanismus, umfassend ein rohrförmiges Element (16) dessen offenes freies Ende (18) ein formschlüssiges Teilstück (20) eines Stützlagers (22) einer Scheibenwischerwelle (24) aufnimmt, wobei das Teilstück (20) mindestens eine zur Achse des Teilstücks (20) in etwa parallele Längsaussparung (28) umfaßt, in die ein Abschnitt (19) der gegenüberliegenden Wand (18) des rohrförmigen Elements durch Verformung mittels eines Stempels (36) entlang einer zur Achse (X-X) des Rohrs in etwa senkrechten Richtung (P) eingedrückt wird, **dadurch gekennzeichnet,** daß die Aussparung in Längsrichtung durch zwei in etwa ebene Abschlußflächen (34) begrenzt ist, die in Gegenrichtung im Verhältnis zur Bewegungsrichtung (P) des Stempels (36) geneigt und formschlüssig mit zwei geneigten Schrägen (40) des Stempels (36) ausgeführt sind.

2. Halterung nach Anspruch 1 , **dadurch gekennseichnet,** daß jede der Abschlußflächen (34) der Aufnahme (28) um etwa 45° im Verhältnis zur Achse (X-X) des Teilstücks (20) geneigt ist.

3. Halterung nach einem der Ansprüche 1 oder 2, **dadurch gekennzeichnet,** daß jede der Abschlußflächen der Aufnahme (28) um etwa 45° im Verhältnis zur Bewegungsrichtung (P) des Stempels (36) geneigt ist.

4. Halterung nach einem der vorangehenden Ansprüche, **dadurch gekennzeichnet,** daß das Teilstück (20) mindestens ein Paar von parallelen und benachbarten Aussparungen (38) umfaßt, die durch eine zur Bewegungsrichtung (P) des stempels (36) und zur Achse (X-X) des Teilstücks (20) parallele Rippe (30) getrennt sind.

5. Halterung nach Anspruch 4 , **dadurch gekennzeichnet,** daß das Teilstück (20) zwei Paare von diametral gegenüberliegenden parallelen und benachbarten Aussparungen (28) umfaßt.

6. Halterung nach einem der Ansprüche 4 bis 5 , **dadurch gekennzeichnet,** daß jede Längsaussparung (28) auf einer Seite seitlich offen und auf der anderen Seite durch eine Trennrippe (30,32) seitlich begrenzt ist.

7. Halterung nach einem der vorangehenden Ansprüche, **dadurch gekennzeichnet,** daß das Teilstück (20) des Lagers (22) eine radiale Schulter (46) als axiale Auflage für das freie Ende des rohrförmigen Elements (18) umfaßt.

8. Halterung nach einem der vorangehenden Ansprüche, **dadurch gekennzeichnet,** daß das freie Ende (18) des rohrförmigen Elements (16) einen kreisrunden Querschnitt aufweist.
